# EUROPEAN PATENT SPECIFICATION

(11) **EP 3 080 447 B1**
(45) Date of publication and mention of the grant of the patent: **12.06.2019**
(21) Application number: 14811760.9
(22) Date of filing: 08.12.2014
(51) Int. Cl.: F03D 80/30

(54) **ROTOR-BLADE DISCHARGE UNIT FOR WIND TURBINES**
ROTORBLATTENTLADUNGSEINHEIT FÜR WINDTURBINEN
UNITÉ DE DÉCHARGE DE PALE DE ROTOR POUR ÉOLIENNES

(30) Priority: 09.12.2013 GB 201321695; 25.04.2014 DK 201470241
(43) Date of publication of application: 19.10.2016
(73) Proprietor: Vestas Wind Systems A/S, 8200 Aarhus N (DK)
(72) Inventor: BAUN, Torben Friis, DK-8541 Skødstrup (DK); HANSEN, Anders Niels, DK-8870 Langå (DK); LYNGBY, Claus Grøn, DK-8740 Brædstrup (DK)
(74) Representative: Vestas Patents Department
(86) International application number: PCT/DK2014/050418
(87) International publication number: WO 2015/086025

(56) References cited:
- EP-A2- 1 577 551
- WO-A1-2004/044419
- WO-A1-2005/050008
- WO-A2-2011/072821
- WO-A2-2012/016568

## Description

### FIELD OF THE INVENTION

The invention relates to a rotor-blade discharge unit of a wind turbine, enabling electric charges to be discharged from a rotor blade, and to a wind turbine comprising one or more rotor-blade discharge units for each rotor blade of the wind turbine.

### BACKGROUND

Known lightning conductor systems for wind turbines enable electric charges to be discharged from the rotor blades. According to WO 2005/050008 A1 a gap in the lightning down-conductor between a pitchable rotor blade and the wind turbine's nacelle is bridged by a lightning current transfer arrangement having sliding contacts which contact complementary slideways. The sliding contacts include a contact rod which provides the electric contact with the slideway, and a slide pad surrounding the contact rod to increase the sliding surface and lower sliding friction.

WO2011/072821 describes a lightning current transfer assembly for a wind turbine with a two alternative current paths, being a lightning current path across a spark gap and a permanent discharge current path. WO2004/044419 describes a spark gap between a rotor blade down conductor and a rotor hub. A sliding contact is in parallel to the spark gap. WO2012/016568 describes a discharge apparatus for a wind turbine with a spark gap width controlled by a sliding member. EP1577551 describes a system for continuous discharge of electrostatic energy from a wind turbine blade.

### SUMMARY OF THE INVENTION

According to the present invention there is provided a rotor-blade discharge unit as defined in claim 1.

According to another aspect, a wind turbine is provided comprising a nacelle, a hub, at least one rotor blade, and at least one rotor-blade discharge unit enabling electric charges to be discharged from the at least one rotor blade. The rotor-blade discharge unit comprises at least one current transfer arrangement. Each current transfer arrangement comprises a roller device, an electrically conductive slideway, and a spark gap. The roller device is biased towards the conductive slideway and is movable relative to the conductive slideway. The roller device comprises at least one contact wheel having a rolling surface. The contact wheel is arranged to roll on the conductive slideway and is biased towards the conductive slideway wherein the rolling surface is arranged to deform against the conductive slideway under the bias acting on the roller device. Thereby a contact surface between the wheel and the conductive slideway is formed. A first current path to discharge electric charges is formed by the contact wheel and the conductive slideway, which is in contact with the contact wheel. A second current path is formed by a spark gap if a spark bridges that spark gap. This second current path is connected in parallel to the first current path. The at least one rotor-blade discharge unit enables electric charges originating from the at least one rotor blade to be discharged towards the nacelle. The at least one rotor-blade discharge unit is mounted on the hub and is electrically insulated from the hub

As the rolling surface of the contact wheel deforms against the conductive slideway under the bias acting on the roller device, this has the result that the contact area for electrical conduction is between the contact wheel and the conductive slideway is greater than if the rolling surface does not deform.

Other features are inherent in the disclosed methods and products or will become apparent to those skilled in the art from the following description of examples and its accompanying drawings.

### BRIEF DESCRIPTION OF THE DRAWINGS

Embodiments are now described, also with reference to the accompanying drawings, wherein:
- Fig. 1: illustrates an embodiment of a wind turbine with a nacelle, a rotor with rotor blades, and a grounding system including a rotor blade discharge unit;
- Fig. 2: illustrates an exemplary current transfer arrangement of the rotor blade discharge unit having a roller device with a chassis acting as a spark-gap electrode;
- Fig. 3: illustrates another exemplary current transfer arrangement having a roller device in which the spark-gap electrode is provided by a protrusion of the chassis;
- Fig. 4: illustrates the hub portion of the wind turbine of Fig. 1 and a charge transfer region with an exemplary embodiment of a rotor-blade discharge unit;
- Fig. 5: illustrates the charge transfer region with a first embodiment of a rotor-blade discharge unit oriented towards the rotor blade;
- Fig. 6: illustrates the charge transfer region with a second embodiment of a rotor-blade discharge unit oriented towards the nacelle;
- Fig. 7: illustrates the charge transfer region with a third embodiment of a rotor-blade discharge unit oriented both towards the rotor blade and the nacelle.

The drawings and the description of the drawings are of examples of the invention and are not of the invention itself.

### DESCRIPTION OF EMBODIMENTS

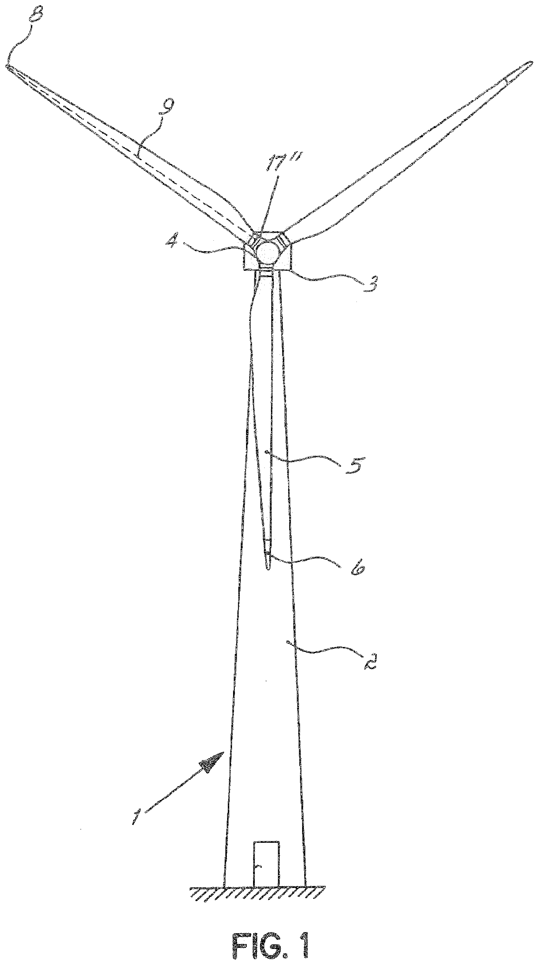

Fig. 1 illustrates an exemplary wind turbine with rotor blade discharge units. Prior to a detailed description of the figures some more general aspects of embodiments will be described.

In some of the embodiments a gap between a rotor blade and a nacelle, which are parts rotatable relative to each other, is bridged by a rotor-blade discharge unit that transfers an electric current arising from lightning striking a rotor blade directly from the root of that rotor blade to the nacelle. Moreover, static charges arising due to friction of the air with the rotor blades are discharged, as the rotor-blade discharge unit provides a permanent galvanic current path to ground potential.

It has been recognized in the context of the present invention that in conventional sliding contact arrangements good electrical contact is difficult to achieve. The contact slider might lift off the slideway, thereby intermittently interrupting the current path. Such interruptions of the current can induce high voltage which may cause sparking flashovers at the sliding contacts.

In the embodiments described herein the risk of contact-lift-off is reduced by the use of contact wheels arranged to deform against a conductive slideway under bias acting on the against the contact wheels. The contact wheels may be made, at least at their rolling surface, of elastomeric electrically conductive or semi-conductive plastics, or of electrically conductive carbonaceous materials having a Shore D hardness of 18 or less.

The contact wheels elastically deform against a conductive slideway under bias acting on the contact wheels such that the contact area of the wheel against the conductive slideway is increased.

In some of the embodiments, the rotor-blade discharge unit is arranged to provide electrical contact between conductive parts of the rotor blades of a wind turbine and a grounded part of the wind turbine, e.g. a slideway at the wind turbine's nacelle which, in turn, is connected to ground via the tower.

The rotor-blade discharge unit may comprise one or more current transfer arrangements. A current transfer arrangement may comprise one or more roller devices, one or more electrically conductive slideways and one or more spark gaps.

A conductive slideway, e.g., is mounted on a part of the wind turbine which is rotatable relative to another part of the wind turbine, e.g. a rotor blade of the wind turbine, a hub of the wind turbine or a nacelle of the wind turbine. In some embodiments a conductive slideway may be mounted on a rotor blade and may be electrically connected to a rotor blade down conductor which may lead from a tip part of the rotor blade down to the conductive slideway. Such a conductive slideway, mounted on a rotor blade, is referred to as rotor-blade-side conductive slideway. The tip part of the rotor blade may be equipped with a lightning receptor. In some embodiments, the rotor-blade-side conductive slideway is electrically connected to the rotor blade tip part. In some embodiments a conductive slideway may be mounted on the nacelle of a wind turbine, referred to as nacelle-side conductive slideway. The nacelle-side conductive slideway, for example, is electrically connected to a grounded structural part of the nacelle. This structural part can be a main structure of the nacelle which is connected to a ground potential.

The roller device has one or more contact wheels which may be made of elastomeric electrically conductive or semi-conductive plastics at least in a region at the rolling surface. In some embodiments the elastomeric semi-conductive plastics have resistivities of 10⁻⁴ Ω·m - 100 kΩ·m and elastomeric conductive plastics have resistivities of 10⁻⁶ Ω·m to 10⁻⁴ Ω·m.

The term "elastomeric electrically conductive or semi-conductive plastics" refers to conductive or semi-conductive solid plastic materials that are able to restore their original shape after a temporary deformation. In order that the elastic character of the material prevents the contact wheel from lifting off the slideway also in cold climates, in some embodiments the elastomeric electrically conductive or semi-conductive plastic has a glass-transition temperature (where it loses most of its elasticity), for example, below minus 20°C, below minus 30°C, or below minus 40°C.

Elastomeric electrically conductive or semi-conductive plastics may be intrinsically electrically conductive or semi-conductive or may be intrinsically non-conductive elastomeric plastics made electrically conductive or semi-conductive by the addition of additives that provide the electrical conductivity, such as carbon black, graphite, carbon nanotubes, metal flakes, metal fibers, particles or fibers coated with metal, conductively coated minerals, conductively coated ceramics, pulverized anthracite, etc. Such additives may also be combined with intrinsically electrically conductive or semi-conductive elastomeric plastics to enhance the electrical conductivity. Furthermore, some intrinsically electrically non-conductive plastics can be made electrically conductive or semi-conductive by adding dopants, e.g. p-type dopants, such as Cl₂, Br₂, I₂, BF₅.

Examples of intrinsically electrically conductive elastomeric plastics are polyaniline (PANI) and polypyrrole (PPy), an example for an intrinsically semi-conductive plastics is oxidized polyparaphenylene (PPP). Polyacetylene (PAC) can be made electrically conductive by doping, for example, with p-type dopants. Polyamide, polyoxymethylene (POMs), ultra high molecular weight polyethylene (UHMWPE), rubbers, such as polybutadiene rubber (PB) and styrene-butadiene rubber (SBR), and silicones (or siloxanes) are examples for elastomeric plastics which are intrinsically non-conductive and can be made conductive by additives, such as the above-mentioned ones.

Suitable electrically conductive carbonaceous materials having a Shore D hardness of 18 or less comprise mainly graphite. They may be fabricated by mixing graphite, one or more organic binders and one or more additives and then carbonizing the binder at high temperatures. Such materials are commercially available.

The one or more contact wheels of a roller device are arranged to move along a conductive slideway that may be mounted on a part of the wind turbine rotatable relative to the part on which the roller device is mounted. The contact wheel(s) is (are) biased towards the conductive slideway. Owing to the elasticity of the contact wheel(s) an extended contact surface between the wheel and the conductive slideway is thereby formed, i.e. the wheels deform against the conductive slideway. In addition to the permanent galvanic contact provided in this manner by the contact wheel(s), the current transfer arrangements also provide a spark gap between these two different parts of the wind turbine rotatable relative to each other. It therefore provides two parallel current paths. The permanent galvanic current path enables static charges to be discharged from the rotor blades. The other current path through the spark gap enables lightning current to be discharged. The resistivity of the wheels will cause a voltage drop across the contact wheel(s) sufficient to fire a spark across the spark gap. The lightning current will therefore bypass the contact wheel(s), thereby preventing any thermal damage to the contact wheel(s). Hence, the first current path with permanent galvanic contact to discharge static electric charges is formed by the contact wheel(s) and the conductive slideway in contact with contact wheel(s). The second current path provided to bypass the contact wheel(s) in the event of a lightning strike is formed between electrodes defining the spark gap. The first and second current paths are electrically connected in parallel. In some embodiments the roller device, or a part of it, forms one of the electrodes of the spark-gap, and the other electrode of the spark gap is provided by the conductive slideway to which the roller device is biased.

In some of the embodiments the rotor-blade discharge unit is mounted on the hub by an elastically deformable strip. In some of these embodiments the strip is made of electrically insulating material, e.g. a glass fibre/resin compound material, in order that the discharge current paths are electrically isolated from the hub.

In some embodiments the roller device has one, two, or more contact wheels. In some embodiments the roller device has a chassis, and the contact wheels are rotatably mounted on the chassis. The roller device is elastically biased towards the conductive slideway that forms a contact surface with the contact wheels mounted on the chassis of the roller device. For example, in embodiments in which the bias is produced by an elastically deformable strip, one end of the strip is mounted on the hub and its other end is mounted on the roller device, thereby biasing the roller device towards the conductive slideway. In some embodiments the roller device has only a single contact wheel. In other embodiments, it is equipped with two or more contact wheels. The contact wheel(s) is (are), for example, rotatably mounted on the chassis by means of an axle (axles) arranged in axle bearings. One axle is equipped with a single contact wheel or, alternatively two or more contact wheels. In some of the embodiments with two contact wheels, the contact wheels are successively arranged in the direction of travel. The contact wheels are, for example, mounted on the leading part of the chassis on a front axle and at the trailing part of the chassis on a rear axle, thereby forming leading and trailing contact wheel(s). The contact wheels may have a prolate shape (i.e. have an axial extension larger than the wheels diameter).

In some embodiments the slideway has the form of a planar circular ring; e.g. a slideway mounted on the face of the nacelle towards the hub. In some of these embodiments the axles are oriented radially with respect to the circle center of the slideway to enable the contact wheel(s) to run along the circular slideway with reduced wear. Moreover, in embodiments with prolate contact wheels, the contact wheels may have a conical shape, with the cone increasing in the radial direction of a circular slideway and a cone angle adapted to the curvature of the circular slideway so that the conical contact wheels run on the circular slideway without slip to reduce wear.

In some of the embodiments with a chassis having front and rear axles, the chassis is hinged to the elastically bendable strips, e.g. by a swivel joint. This ensures that the bias produced by the force exerted by the bendable strip is distributed between the leading and trailing rollers, so that both rollers are equally urged towards the slideway and provide permanent galvanic contact.

In some embodiments the spark gap of a rotor-blade discharge unit is defined by an electrode that is electrically connected to the roller device but designed to be spatially separated from the roller device. The current path, formed by the spark gap, upon occurrence of a spark bridging the spark gap, is therefore connected in parallel to the current path formed by the contact wheel(s) which is (are) in contact with the conductive slideway. In the event of a spark caused by lightning currents, bridging the spark gap, the roller(s) is (are) not thermally damaged by the lightning current, as the spark gap(s) is (are) spatially separated from the roller(s).

In some embodiments with roller device(s) comprising one or more contact wheels and a chassis, the chassis is arranged to move along the conductive slideway at a given distance by using contact wheel(s) that is (are) rotatably mounted on the chassis. To provide frictionless movement of the chassis along the conductive slideway, a gap between the chassis and the conductive slideway is provided, thereby the chassis forms the spark gap electrode. A frictionless movement in this context is defined to be a movement only hindered by rolling friction.

Alternatively the spark-gap electrode is provided by one or more protrusions of the chassis, located on the surface of the chassis facing the conductive slideway. As mentioned above, the spark gap provides a current path, upon occurrence of a spark bridging the spark gap, i.e. the second current path connected in parallel to the first current path. Since the chassis either acts as the spark-gap electrode itself or has a protrusion that acts as the spark-gap electrode, the second current path runs through the chassis. As in some embodiments the one or more contact wheels are mounted on the chassis in an electrically conducting manner, a current path may run from the contact wheels through the chassis, i.e. the first current path.

In some embodiments the wind turbine with a nacelle, a hub and one or more rotor blades is also equipped with one or more rotor-blade discharge units. The nacelle is arranged to provide a nacelle-side conductive slideway as a part of the associated rotor-blade discharge unit and the one or more rotor blades are arranged to provide rotor-blade side conductive slideways as part of the associated rotor-blade discharge units. As mentioned above, such a rotor-blade discharge unit may be mounted on the hub, in an electrically insulated manner, for example, using elastically bendable strips. In this way the rotor-blade discharge unit enables electric charges originating from the rotor blade(s) to be discharged onto the nacelle which, in turn, is electrically connected to the ground.

The electric charges are discharged from the rotor blades either by a combination of discharge cables and/or electrically conductive strips connected to a current transfer arrangement or by a plurality of current transfer arrangements connected by cables.

Additionally, the one or more rotor blades of the wind turbine are arranged to be pitchable. The one or more rotor-blade discharge units may be associated with the one or more rotor blades, thus the rotor blades are equipped with rotor-blade-side conductive slideways. The roller-devices and corresponding contact wheels are biased towards the associated rotor-blade-side conductive slideways. The roller device(s), as part of a current transfer arrangement establish the first and second current paths from the associated rotor blades to the hub. The one or more rotor-blade discharge units thereby bypass pitch-bearings connecting the rotor blades to the hub that is electrically connected to a ground potential.

In some embodiments the rotor-blade discharge unit, mounted on the hub, is arranged to be electrically connected to the nacelle by one or more roller devices. The roller device(s), comprised by the current transfer arrangement, i.e. the rotor-blade discharge unit, are biased towards the nacelle-side conductive slideway, also comprised by the current transfer arrangement. The electrical connection, leading charges from the rotor-blade(s) to the roller device is provided by a discharge cable, a conductive band, a conductive strip or the like. The rotor-blade discharge units thereby bypass the main shaft-bearing connecting the hub to the nacelle. Hence, a first and second current path from the nacelle to another part of the wind turbine that is rotatable relative to the nacelle is formed.

In some embodiments the one or more rotor-blade discharge units comprise more than one current transfer arrangement, wherein a first roller device, comprised by a first current transfer arrangement is biased towards a rotor-blade-side conductive slideway. The contact wheels provide electrical contact between the roller device and this rotor-blade-side conductive slideway that may be connected to a rotor-blade down conductor which, in turn, may be connected to lightning receptors mounted on the rotor blade. A second roller device, comprised by a second current-transfer arrangement is biased towards the nacelle-side conductive slideway connected to a ground potential. The two current transfer arrangements are electrically connected, for example, by a discharge-cable, thereby enabling a transfer of charges from the rotor-blade-side conductive slideway to the nacelle-side conductive slideway over the first and second current path formed by the current transfer arrangements. In this way pitch bearings connecting the rotor blades to the hub and the main-shaft bearing connecting the hub to the nacelle are bypassed.

The elastic deformation of the wheels against the conductive slideway also reduces the noise emitted by the wheels rolling over the slideway, compared to a non-deformable wheel.

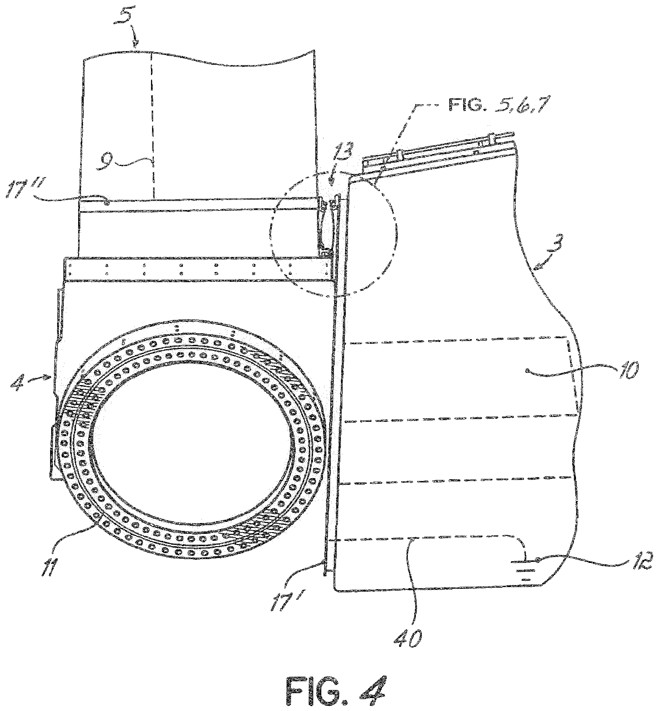

Returning now to Fig. 1, an exemplary wind turbine 1 has a rotor with a hub 4 rotatably connected to a nacelle 3 mounted on a yaw bearing on top of a tower 2. The nacelle is electrically connected to the ground 12. In the example shown, the rotor of the wind turbine 1 has three rotor blades 5 with a tip part 8, a lightning receptor 6 mounted on the tip part 8, and a rotor blade down conductor 9 leading to a rotor-blade-side conductive slideway 17". The rotor blades 5 are made of electrically non-conducting material, such as glass-fiber-reinforced plastics, at least in the root section of the blades, so that electric charges on a rotor blade 5 cannot be discharged towards the hub 4 via the rotor-blade 5 itself. In the example shown, the rotor blades 5 can be pitched, i.e. the aerodynamic angle-of-attack can be adjusted by rotating the blades 5 around their longitudinal axes, by means of a pitch bearing 11 located between the rotor-blade root and the hub 4 (Fig. 4). The hub 4 is mounted on a main shaft 10, supported by main-shaft bearings in the nacelle 3 (Fig. 4).

The wind turbine 1 is equipped with a grounding system that includes a rotor-blade discharge unit 13 for each rotor blade 5. The grounding system prevents the rotor blades 5 from becoming charged up with static charges, and protects the mechanical and electronic equipment from damage caused by lightning strikes.

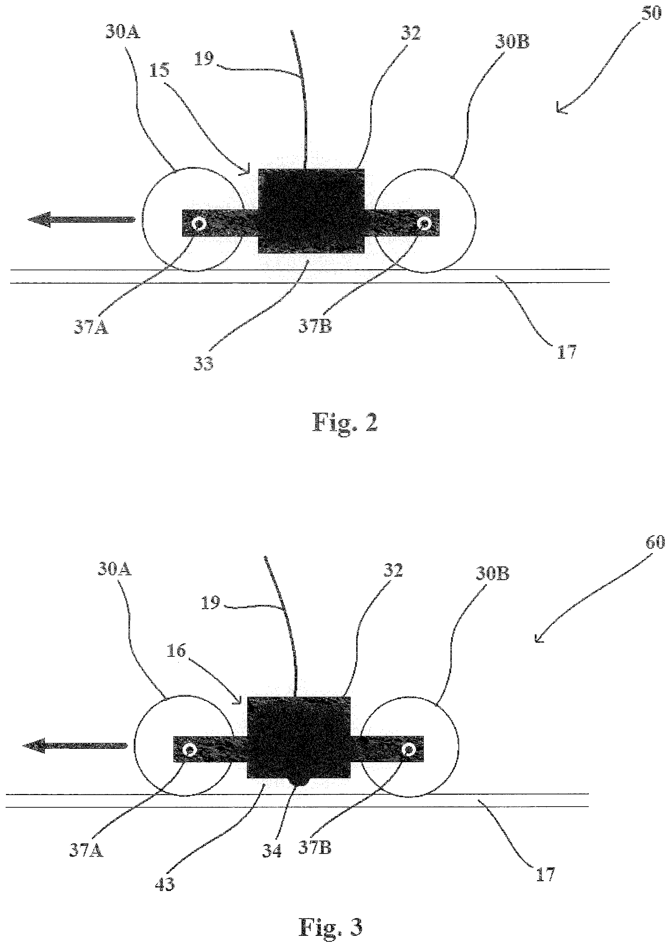

As part of the grounding system, the tip parts 8 of rotor blades 5 are equipped with lightning receptors 6 electrically connected to rotor blade down conductors 9 leading internally along the rotor blades 5. In some embodiments further lightning receptors are distributed over the length of the rotor blades 5 and are connected to rotor blade down conductors 9. The lightning receptors, which are distributed along the rotor blades 5, may not only be struck by lightning, but also collect static charges The blades 5 are equipped with devices to accept lightning strikes, which are connected to the rotor blade down conductors 9, designed to collect electric charges created by the rotation of the rotor blades 5. The rotor blade down conductors 9 transfer electric charges from the tip parts 8 to the rotor-blade-side conductive slideways 17" located at the roots of the rotor blades 5. Each rotor-blade-side conductive slideway 17" has an electrical connection to a roller device 15, 16 as shown in Fig. 2 and Fig. 3.

Each rotor-blade discharge unit 13 has an electrical connection to the grounded nacelle 3, therefore the tip parts 8 are electrically connected to a ground potential 12. Hence, the wind turbine 1 is grounded.

The roller device 15 shown in Fig. 2 is part of an exemplary current transfer arrangement 50 and has two contact wheels 30A and 30B, which are arranged to roll along a conductive slideway 17. The contact wheels 30A, 30B are rotatably mounted on the chassis 32 by a front axle 37A and a rear axle 37B, respectively. The chassis 32 is made of conductive material, e.g. steel, and is spaced from the conductive slideway 17 by the contact wheels 30A, 30B. Furthermore a discharge cable 19 is electrically connected to the chassis 32 of roller device 15.

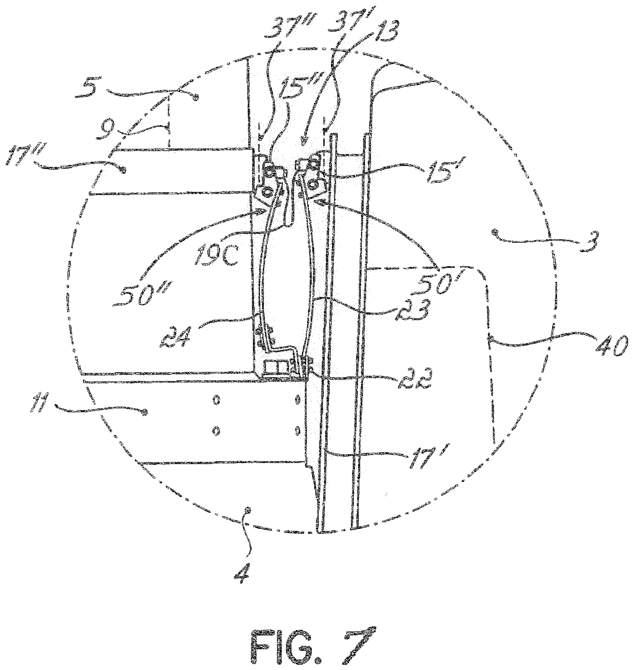

The roller device 15 is biased towards the conductive slideway 17, as shown in Fig. 7. The contact wheels 30A, 30B are made of a material that deforms due to the elastic bias acting on the chassis 32 and an electrical connection of the contact wheels 30A, 30B to the conductive slideway 17 is thereby ensured because of the increased contact area of the wheels. If the galvanic connection was lost, static discharges between the conductive slideway 17 and the roller device 15 would occur, leading to spark erosions of the current transfer arrangement 50. In the event of lightning striking a rotor blade 5 an arc will form between the conductive slideway 17 that is electrically connected to the rotor blades and the chassis 32 acting as a spark-gap electrode. The arc will form across a spark gap 33. The lightning current will not pass through the contact wheels 30A, 30B due to their resistivity. In other words, in the event of a lightning strike, the voltage drop across the contact wheels 30A, 30B is so high that flashover will occur between the chassis 32 and the conductive slideway 17. As a consequence, the contact wheels 30A, 30B as well as the wheel and axle bearings are not exposed to the full lightning current.

In the case that no sparks bridging the spark gap 33 occur, an electric current will move through the current transfer arrangement 50, passing the following parts of this current transfer arrangement 50: conductive slideway 17, the contact wheels 30A, 30B connected in parallel, front axle 37A and rear axle 37B, the chassis 32 and the discharge cable 19.

The exemplary roller device 16 illustrated in Fig. 3 is part of a current transfer arrangement 60. This roller device 16 is identical to the roller device 15, described in accordance with Fig. 2, and differs from roller device 15 only in one feature. The chassis 42 of roller device 16 exhibits a protrusion 34 on the surface of chassis 42 that faces the conductive slideway 17. This protrusion 34 acts as the spark-gap electrode of roller device 16.

A hub region including a rotor-blade discharge unit 13 associated with each rotor blade 5 is illustrated in more detail in Fig. 4. The pitch bearing 11 is mounted on the hub 4, which, in turn, is fixedly mounted on the main shaft 10. The root part of a rotor blade 5 is mounted on the associated pitch bearing 11 and is equipped with a rotor-blade-side conductive slideway 17". This conductive slideway 17" is associated with a current transfer arrangement 50" (Fig. 7) and is electrically connected to a rotor blade down conductor 9. The rotor-blade discharge unit 13, shown in Fig. 4, establishes an electrical connection between the rotor-blade-side conductive slideway and the nacelle-side conductive slideway 17' that is electrically connected to a conductor 40, e.g. a cable, which in turn is connected to the ground 12.

The main shaft 10 rotates around a nearly horizontal axis, whereas the rotor blades 5 are rotatable around nearly longitudinal axes which are perpendicular to the main-shaft axis. Thus, seen from the perspective of an observer located on the hub 4, the rotor blade 5 and the nacelle 3 rotate around two perpendicular axes if the pitch angle of the rotor blade 5 is altered with respect to the hub.

As rotor-blade discharge units 13 are fixedly mounted on the hub 4, and the hub 4 is fixedly mounted on the main shaft 10, the rotor-blade discharge units 13 rotate with the main shaft 10.

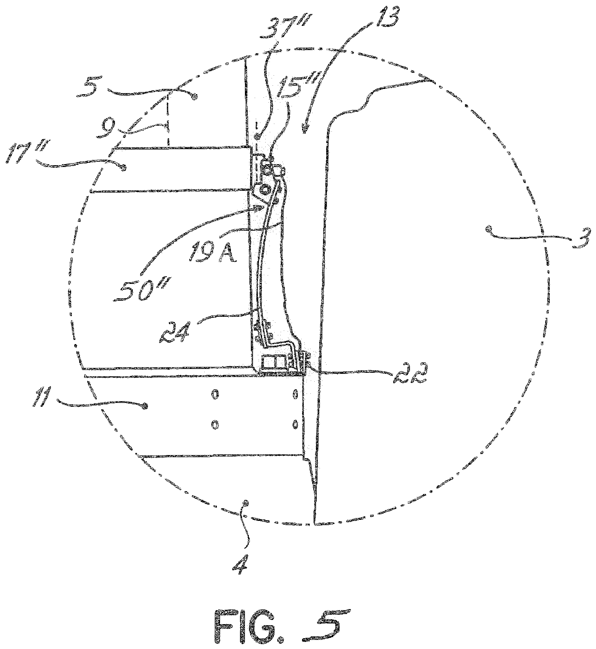

The exemplary rotor-blade discharge unit 13 including roller device 15", shown in Fig. 5, is mounted on the hub 4 between the root of a rotor blade 5 and the nacelle 3. The roller device 15" is part of a current transfer arrangement 50" associated with the rotor blade 5, the current transfer arrangement 50" together with the associated electrical connection to the hub 4 via discharge cable 19A make up the rotor-blade discharge unit 13. The rotor blade 5 has a rotor-blade-side conductive slideway 17" that is arranged around the root of the rotor blade 5, as already described in conjunction with Fig. 4. The roller-device 15" enables charges to be transferred from the rotor-blade-side slideway 17" to the hub 4, thereby bypassing the pitch bearing 11. The rotor-blade-side conductive slideway 17" is internally connected to the rotor blade down conductor 9. As the rotor blade 5 is made of non-conductive material in this exemplary embodiment, there is no direct electric path between the rotor-blade-side conductive slideway 17" and the hub 4. The only electrical connection between a rotor blade 5 and the hub 4 is provided by the rotor-blade discharge unit 13. In the side-view given by Fig. 5 front and rear axles 37A and 37B of roller device 15", on which the contact wheels 30A, 30B of roller device 15" are mounted, as shown in Fig. 2, line up. A projection of axles 37A and 37B is depicted in Fig. 5 as a dashed line 37".

The roller device 15" is mounted at one end of a bendable strip 24 which at its opposite end is fixedly mounted in an electrically insulated manner by mounting bolts 22 on an immobile part of the pitch bearing 11.The bendable strip 24 is bent in such a way that it elastically biases the contact wheels 30A, 30B of roller device 15" (shown in Fig. 2 in more detail) towards the rotor-blade-side conductive slideway 17".

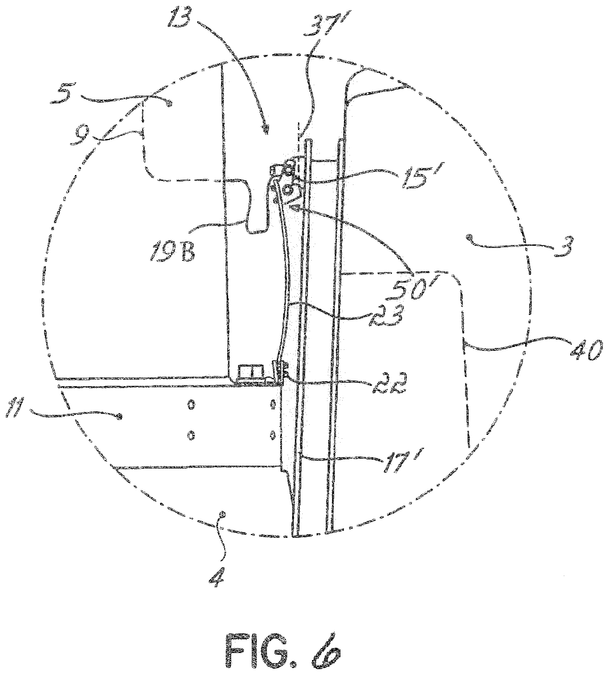

The further exemplary embodiment of the rotor-blade discharge unit 13 shown in Fig. 6 includes the roller device 15', which is depicted in more detail in Fig. 2. The rotor-blade discharge unit 13 is mounted on the hub 4 between the root of rotor blade 5 and the nacelle 3. The roller device 15' enables charges to be transferred directly from a rotor blade down conductor 9 to a nacelle-side slideway 17', which is electrically connected to a structural part of the nacelle 3 by a conductor 40, for example, a cable. The whole structural part of the nacelle 3 is used for conducting the lightning current to the tower 2. As in this exemplary embodiment, the rotor blades 5 are made of non-conductive material, there is no electrical path between the rotor blade 5 and the hub 4. The rotor-blade discharge unit 13 is formed by the current transfer arrangement 50' including the nacelle-side conductive slideway 17'. The roller device 15' is electrically connected to the rotor blade down conductor 9 over a discharge-cable 19B. The roller device 15' is biased towards the nacelle-side conductive slideway 17' and therefore the wheels 30A, 30B of roller device 15' form a contact surface with the nacelle-side conductive slideway 17'. In the side-view given by Fig. 6 front and rear axles 37A, 37B of roller device 15', on which the contact wheels 30A, 30B of roller device 15' are mounted, as shown in Fig. 2, line up. A projection of axles 37A and 37B is depicted in Fig. 6 as a dashed line 37'.

The roller device 15' is mounted at one end of an elastically deformable strip 23 which at its opposite end is fixedly mounted in an electrically insulated manner by mounting bolts 22 on an immobile part of the pitch bearing 11. The bendable strip 23 is bent in such a way that it elastically biases the contact wheels 30A, 30B of the roller device 15' (shown in Fig. 2 in more detail) towards the nacelle-side conductive slideway 17'. In this exemplary embodiment of the rotor-blade discharge unit 13 of the wind turbine 1 with three rotor blades 5 (Fig. 1) a rotor-blade discharge unit 13 for each rotor blade 5 is provided. The nacelle-side conductive slideway 17' is therefore shared between three current transfer arrangements 50'.

Another exemplary embodiment of the rotor-blade discharge unit 13 is illustrated in Fig. 7. The rotor-blade discharge unit 13 is mounted on the hub 4 between the root of a rotor blade 5 and the nacelle 3. Each rotor blade 5 has a rotor-blade-side conductive slideway 17", associated with current transfer arrangement 50" that is arranged around the root of the rotor blade 5 and is internally connected to the rotor blade down conductor 9. The surface of nacelle 3 facing the hub 4 provides the nacelle-side conductive slideway 17', associated with current transfer arrangement 50'. This nacelle-side conductive slideway 17' is arranged around a main-shaft opening of the nacelle 3, which is electrically coupled to the grounded part(s) of the nacelle 3 by a conductor 40.

The roller devices 15', 15" are biased to the nacelle-side conductive slideway 17' or the rotor-blade-side conductive slideway 17", respectively. Thereby enabling charges to be transferred directly from the rotor-blade-side conductive slideway 17" to the nacelle-side conductive slideway 17', while bypassing the hub 4, as they are electrically connected by discharge cable 19C. Since in this exemplary embodiment each rotor blade 5 is made of non-conducting material, there is no direct electrical path between the rotor-blade-side conductive slideway 17" and the hub 4. The rotor-blade discharge unit 13 is formed by two current transfer arrangements 50', 50", including roller devices 15', 15" contacting the rotor-blade-side conductive slideway 17" and the nacelle-side conductive slideway 17', respectively. In the side-view given by Fig. 7 front and rear axles 37A, 37B of roller devices 15', 15", which are shown in Fig. 2 for each roller device 15 individually, on which the contact wheels 30A, 30B of roller devices 15', 15" are mounted, line up for each roller device 15', 15", respectively. A projection of front and rear axles 37A, 37B of roller devices 15', 15" is depicted by dashed lines 37', 37" in Fig. 7, for the roller devices 15', 15".

The roller device 15' is mounted at one end of the bendable strip 23 which at its opposite end is fixedly mounted in an electrically insulated manner by mounting bolts 22, on an immobile part of the pitch bearing 11. The bendable strip 23 is bent in such a way that it elastically biases the roller device 15' towards the nacelle-side conductive slideway 17'. In the same way, roller device 15" is mounted at one end of the bendable strip 24, which is mounted on the pitch bearing 11 in the same way as bendable strip 23. The elastically deformable strip 24 is bent such that it elastically biases the roller device 15" towards the rotor-blade-side conductive slideway 17". The chassis 32 of roller devices 15' and 15" are electrically coupled via the discharge-cable 19C, thereby providing a current path from the rotor-blade side conductive slideway 17" to the nacelle-side conductive slideway 17'. As described in conjunction with Fig. 6, in the embodiment of Fig. 7 the nacelle-side conductive slideway 17' is shared between three current transfer arrangements 50'.

Although certain products and methods constructed in accordance with the teachings of the invention have been described herein, the scope of coverage of this patent is not limited thereto. On the contrary, this patent covers all embodiments of the teachings of the invention fairly falling within the scope of the appended claims.

## Claims

1. A rotor-blade discharge unit (13) enabling electric charges to be discharged from a rotor blade (5) of a wind turbine (1), the rotor blade discharge unit (13) comprising at least one current transfer arrangement (50), the current transfer arrangement (50) comprising:
a roller device (15, 16),
an electrically conductive slideway (17), and
a spark gap (33),
wherein the roller device (15, 16) is biased towards the conductive slideway (17) and is movable relative to the conductive slideway (17),
the roller device (15, 16) comprising:
at least one contact wheel (30A, 30B), having a rolling surface and the contact wheel is arranged to roll on the conductive slideway (17) and is biased towards the conductive slideway, wherein
the rolling surface is arranged to deform against the conductive slideway under the bias acting on the roller device (15, 16),
wherein the contact wheel (30A, 30B) and the conductive slideway (17) form a first current path to discharge the electric charges ,
wherein the spark gap (33) forms a second current path upon occurrence of a spark bridging the spark gap (33), wherein the second current path is connected in parallel to said first current path, and
wherein the contact wheel (30A, 30B) is made, at least in a region at the rolling surface, of elastomeric electrically conductive or semi-conductive plastics, or of electrically conductive carbonaceous materials having a Shore D hardness of 18 or less.

2. The rotor-blade discharge unit (13) according to claim 1, wherein the roller device (15, 16) comprises a spark-gap electrode arranged to face the conductive slideway (17).

3. The rotor-blade discharge unit (13) according to claim 1 or 2, wherein the roller device (15, 16) is mounted on at least one elastically bendable strip (23, 24) to provide the bias towards the conductive slideway (17).

4. The rotor-blade discharge unit (13) according to any one of claims 1 to 3, wherein the roller device (15, 16) comprises one, two, or more contact wheels (30A, 30B).

5. The rotor-blade discharge unit (13) according to any one of claims 1 to 4, wherein the roller device (15, 16) comprises two or more contact wheels (30A, 30B) and a chassis (32), the contact wheels (30A, 30B) being rotatably mounted on the chassis (32), wherein the chassis (32) is biased towards the conductive slideway (17), thereby biasing the contact wheels (30A, 30B) towards the conductive slideway (17).

6. The rotor-blade discharge unit (13) according to claims 3 and 5, wherein the chassis (32) is hinged to the elastically bendable strip (23, 24).

7. The rotor-blade discharge unit (13) according to claim 2 in combination with claim 5 or 6, wherein the chassis (32) is arranged to move along the conductive slideway (17) at a given distance without touching it, by the effect of the contact wheels (30A, 30B), and to form the spark-gap electrode facing the conductive slideway (17).

8. The rotor-blade discharge unit (13) according to claim 7, wherein the spark-gap electrode is in the form of a protrusion (34) at the chassis (32) towards the conductive slideway (17), or is provided by the chassis (32) itself without a protrusion (34) towards the conductive slideway (17).

9. The rotor-blade discharge unit (13) according to claim 7 or 8, wherein the second current path, formed by the spark gap (33) upon occurrence of a spark bridging the spark gap, runs through the chassis (32).

10. The rotor-blade discharge unit (13) according to any one of claims 5 to 9, wherein the contact wheels (30A, 30B) are mounted on the chassis (32) in an electrically conducting manner, and the first current path runs from the contact wheels (30A, 30B) through the chassis (32).

11. The rotor-blade discharge unit (13) according to claim 1, wherein the elastomeric electrically conductive or semi-conductive plastics, has a glass-transition temperature below minus 20°C, or minus 30°C, or minus 40°C.

12. A wind turbine (1) comprising a nacelle (3), a hub (4), at least one rotor blade (5), and at least one rotor-blade discharge unit (13) according to any one of claims 1 to 11, the at least one rotor-blade discharge unit (13) enabling electric charges originating from the at least one rotor blade (5) to be discharged towards the nacelle (3), and the at least one rotor-blade discharge unit (13) being mounted on the hub (4) electrically insulated from the hub (4).

13. The wind turbine (1) according to claim 12,
wherein the at least one rotor blade (5) is pitchably mounted on the hub (4) and the at-least-one rotor-blade discharge unit (13) is associated with the at least one rotor blade (5), thus the conductive slideway (17) is mounted on the at least one rotor blade (5),
wherein the at least one roller-device (15, 16) is directed with its at least one contact wheel (30A, 30B) towards the conductive slideway (17") that is mounted on the rotor blade (5) to establish the first and second current paths from the at least one rotor blade (5) to the rotor-blade discharge unit (13).

14. The wind turbine (1) according to claim 12,
wherein the at least one rotor-blade discharge unit (13) is arranged to transfer charges towards the nacelle (3), and the conductive slideway (17) is mounted on the nacelle (3),
wherein the at least one roller-device (15, 16) is directed with its at least one contact wheel (30A, 30B) towards the conductive slideway (17') mounted on the nacelle (3) to establish the first and second current paths from the nacelle (3) to the rotor-blade discharge unit (13).

15. The wind turbine (1) according to claim 12, wherein the at least one rotor blade (5) is pitchable, and the at least one rotor-blade discharge unit (13) comprises a first and second current transfer arrangement (50', 50"), the at least one rotor-blade discharge unit (13) being mounted on the hub (4) electrically insulated from the hub (4),
wherein the first current transfer arrangement (50') is associated with the nacelle (3), thus a first conductive slideway (17') is mounted on the nacelle (3),
wherein the second current transfer arrangement (50") is associated with the at least one rotor blade (5), thus a second conductive slideway (17") is mounted on the at least one rotor blade (5),
wherein the roller devices (15, 16), comprised by the first and second current transfer arrangements (50', 50"), are directed with their at least one contact wheels (30A, 30B) towards the first conductive slideway (17') and the second conductive slideway (17"), respectively, wherein the first and second current transfer arrangements (50', 50") are electrically connected in order to establish the first and second current paths from the at least one pitchable rotor blade (5) to the nacelle (3), thereby electrically bypassing the hub (4).

## Patentansprüche

1. Rotorblattentladungseinheit (13), die eine Entladung elektrischer Ladungen von einem Rotorblatt (5) einer Windturbine (1) ermöglicht, wobei die Rotorblattentladungseinheit (13) zumindest eine Stromübertragungsanordnung (50) umfasst, die Stromübertragungsanordnung (50) umfassend:
eine Rollvorrichtung (15, 16),
eine elektrisch leitende Führungsbahn (17) und
eine Funkenstrecke (33),
wobei die Rollvorrichtung (15, 16) zur leitenden Führungsbahn (17) vorgespannt ist und relativ zur leitenden Führungsbahn (17) beweglich ist,
die Rollvorrichtung (15, 16) umfassend:
zumindest ein Kontaktrad (30A, 30B) mit einer Rollfläche und wobei das Kontaktrad angeordnet ist, auf der leitenden Führungsbahn (17) zu rollen und zur leitenden Führungsbahn vorgespannt ist, wobei
die Rollfläche angeordnet ist, sich unter der Vorspannung, die auf die Rollvorrichtung (15, 16) wirkt, gegen die leitende Führungsbahn zu verformen,
wobei das Kontaktrad (30A, 30B) und die leitende Führungsbahn (17) einen ersten Strompfad zum Entladen der elektrischen Ladungen bilden,
wobei die Funkenstrecke (33) einen zweiten Strompfad bei Auftreten eines Funkens, der die Funkenstrecke (33) überbrückt, bildet, wobei der zweite Strompfad parallel zum ersten Strompfad verbunden ist, und
wobei das Kontaktrad (30A, 30B) zumindest in einem Bereich an der Rollfläche, aus elastomerem, elektrisch leitenden oder halbleitendem Kunststoff oder aus elektrisch leitenden, kohlenstoffhaltigen Materialien mit einer Shore D-Härte von 18 oder weniger besteht.

2. Rotorblattentladungseinheit (13) nach Anspruch 1, wobei die Rollvorrichtung (15, 16), eine Funkenstreckenelektrode umfasst, die angeordnet ist, der leitenden Führungsbahn (17) zugewandt zu sein.

3. Rotorblattentladungseinheit (13) nach Anspruch 1 oder 2, wobei die Rollvorrichtung (15, 16) an zumindest einem elastisch biegbaren Streifen (23, 24) montiert ist, um die Vorspannung zur leitenden Führungsbahn (17) bereitzustellen.

4. Rotorblattentladungseinheit (13) nach einem der Ansprüche 1 bis 3, wobei die Rollvorrichtung (15, 16) ein, zwei oder mehr Kontakträder (30A, 30B) umfasst.

5. Rotorblattentladungseinheit (13) nach einem der Ansprüche 1 bis 4, wobei die Rollvorrichtung (15, 16) zwei oder mehr Kontakträder (30A, 30B) und ein Gehäuse (32) umfasst, wobei die Kontakträder (30A, 30B) drehbar an dem Gehäuse (32) montiert sind, wobei das Gehäuse (32) zur leitenden Führungsbahn (17) vorgespannt ist, wodurch die Kontakträder (30A, 30B) zur leitenden Führungsbahn (17) vorgespannt sind.

6. Rotorblattentladungseinheit (13) nach einem der Ansprüche 3 und 5, wobei das Gehäuse (32) an den elastisch biegbaren Streifen (23, 24) angelenkt ist.

7. Rotorblattentladungseinheit (13) nach Anspruch 2 in Kombination mit Anspruch 5 oder 6, wobei das Gehäuse (32) angeordnet ist, sich durch die Wirkung der Kontakträder (30A, 30B) entlang der leitenden Führungsbahn (17) bei einem gegebenen Abstand zu bewegen, ohne diese zu berühren, und die Funkenstreckenelektrode zu bilden, die der leitenden Führungsbahn (17) zugewandt ist.

8. Rotorblattentladungseinheit (13) nach Anspruch 7, wobei die Funkenstreckenelektrode die Form eines Fortsatzes (34) an dem Gehäuse (32) zur leitenden Führungsbahn (17) aufweist oder durch das Gehäuse (32) selbst ohne Fortsatz (34) zur leitenden Führungsbahn (17) bereitgestellt ist.

9. Rotorblattentladungseinheit (13) nach Anspruch 7 oder 8, wobei der zweite Strompfad, der durch die Funkenstrecke (33) bei Auftreten eines Funkens, der die Funkenstrecke überbrückt, gebildet wird, durch das Gehäuse (32) verläuft.

10. Rotorblattentladungseinheit (13) nach einem der Ansprüche 5 bis 9, wobei die Kontakträder (30A, 30B) an dem Gehäuse (32) elektrisch leitend montiert sind und der erste Strompfad von den Kontakträdern (30A, 30B) durch das Gehäuse (32) verläuft.

11. Rotorblattentladungseinheit (13) nach Anspruch 1, wobei der elastomere, elektrisch leitende oder halbleitende Kunststoff eine Glasübergangstemperatur unter minus 20 °C oder minus 30 °C oder minus 40 °C hat.

12. Windturbine (1), umfassend eine Gondel (3), eine Nabe (4), zumindest ein Rotorblatt (5) und zumindest eine Rotorblattentladungseinheit (13) nach einem der Ansprüche 1 bis 11, wobei die zumindest eine Rotorblattentladungseinheit (13) eine Entladung elektrischer Ladungen, die von dem zumindest einen Rotorblatt (5) stammen, zur Gondel (3) ermöglicht und die zumindest eine Rotorblattentladungseinheit (13) an der Nabe (4), elektrisch isoliert von der Nabe (4) montiert ist.

13. Windturbine (1) nach Anspruch 12,
wobei das zumindest eine Rotorblatt (5) winkelverstellbar an der Nabe (4) montiert ist und die zumindest eine Rotorblattentladungseinheit (13) mit dem zumindest einen Rotorblatt (5) verbunden ist, wodurch die leitende Führungsbahn (17) an dem zumindest einen Rotorblatt (5) montiert ist,
wobei die zumindest eine Rollvorrichtung (15, 16) mit ihrem zumindest einen Kontaktrad (30A, 30B) zu der leitenden Führungsbahn (17") gelenkt wird, die am Rotorblatt (5) montiert ist, um den ersten und zweiten Strompfad von dem zumindest einen Rotorblatt (5) zur Rotorblattentladungseinheit (13) zu errichten.

14. Windturbine (1) nach Anspruch 12,
wobei die zumindest eine Rotorblattentladungseinheit (13) angeordnet ist, Ladungen zur Gondel (3) zu übertragen und die leitende Führungsbahn (17) an der Gondel (3) montiert ist.
wobei die zumindest eine Rollvorrichtung (15, 16) mit ihrem zumindest einen Kontaktrad (30A, 30B) zu der leitenden Führungsbahn (17') gelenkt wird, die an der Gondel (3) montiert ist, um den ersten und zweiten Strompfad von der Gondel (3) zur Rotorblattentladungseinheit (13) zu errichten.

15. Windturbine (1) nach Anspruch 12, wobei das zumindest eine Rotorblatt (5) winkelverstellbar ist und die zumindest eine Rotorblattentladungseinheit (13) eine erste und zweite Stromübertragungsanordnung (50', 50") umfasst, wobei die zumindest eine Rotorblattentladungseinheit (13) an der Nabe (4) elektrisch isoliert von der Nabe (4) montiert ist,
wobei die erste Stromübertragungsanordnung (50') mit der Gondel (3) verbunden ist, wodurch eine erste leitende Führungsbahn (17') an der Gondel (3) montiert ist,
wobei die zweite Stromübertragungsanordnung (50") mit dem zumindest einen Rotorblatt (5) verbunden ist, wodurch eine zweite leitende Führungsbahn (17") an dem zumindest einen Rotorblatt (5) montiert ist,
wobei die Rollvorrichtungen (15, 16), die durch die erste und zweite Stromübertragungsanordnung (50', 50") umfasst sind, mit ihren zumindest einen Kontakträdern (30A, 30B) zur ersten leitenden Führungsbahn (17') bzw. zur zweiten leitenden Führungsbahn (17") gelenkt werden, wobei die erste und zweite Stromübertragungsanordnung (50', 50") elektrisch verbunden sind, um den ersten und zweiten Strompfad von dem zumindest einen winkelverstellbaren Rotorblatt (5) zur Gondel (3) zu errichten, wodurch die Nabe (4) elektrisch umgangen wird.

## Revendications

1. Unité de décharge de pale de rotor (13) permettant de décharger des charges électriques d'une pale de rotor (5) d'une éolienne (1), l'unité de décharge de pale de rotor (13) comprenant au moins un agencement de transfert de courant (50), l'agencement de transfert de courant (50) comprenant :
un dispositif à rouleaux (15, 16),
une coulisse conductrice de l'électricité (17) et
un éclateur (33),
dans laquelle le dispositif à rouleaux (15, 16) est sollicité vers la coulisse conductrice (17) et peut se déplacer par rapport à la coulisse conductrice (17),
le dispositif à rouleaux (15, 16) comprenant :
au moins une roue de contact (30A, 30B) ayant une surface de roulement et la roue de contact est agencée pour rouler sur la coulisse conductrice (17) et est pressée vers la coulisse conductrice, dans laquelle
la surface de roulement est agencée pour se déformer contre la coulisse conductrice par l'action de la sollicitation agissant sur le dispositif à rouleaux (15, 16),
dans laquelle la roue de contact (30A, 30B) et la coulisse conductrice (17) forment un premier trajet de courant pour décharger les charges électriques,
dans laquelle l'éclateur (33) forme un second trajet de courant lors de l'apparition d'une étincelle pontant l'éclateur (33), dans laquelle le second trajet de courant est connecté en parallèle avec ledit premier trajet de courant et
dans laquelle la roue de contact (30A, 30B) est constituée, au moins dans une région sur la surface de roulement, d'une matière plastique élastomère conductrice de l'électricité ou semi-conductrice ou de matériaux carbonés conducteurs de l'électricité ayant une dureté Shore D de 18 ou moins.

2. Unité de décharge de pale de rotor (13) selon la revendication 1, dans laquelle le dispositif à rouleaux (15, 16) comprend une électrode d'éclateur agencée pour faire face à la coulisse conductrice (17).

3. Unité de décharge de pale de rotor (13) selon la revendication 1 ou 2, dans laquelle le dispositif à rouleaux (15, 16) est monté sur au moins une bande à fléchissement élastique (23, 24) pour fournir la sollicitation vers la coulisse conductrice (17).

4. Unité de décharge de pale de rotor (13) selon l'une quelconque des revendications 1 à 3, dans laquelle le dispositif à rouleaux (15, 16) comprend une, deux ou plus de roues de contact (30A, 30B).

5. Unité de décharge de pale de rotor (13) selon l'une quelconque des revendications 1 à 4, dans laquelle le dispositif à rouleaux (15, 16) comprend deux ou plus de roues de contact (30A, 30B) et un châssis (32), les roues de contact (30A, 30B) étant montées à rotation sur le châssis (32), dans laquelle le châssis (32) est sollicité vers la coulisse conductrice (17), en sorte de solliciter les roues de contact (30A, 30B) vers la coulisse conductrice (17).

6. Unité de décharge de pale de rotor (13) selon les revendications 3 et 5, dans laquelle le châssis (32) est articulé sur la bande à fléchissement élastique (23, 24).

7. Unité de décharge de pale de rotor (13) selon la revendication 2 en combinaison avec la revendication 5 ou 6, dans laquelle le châssis (32) est agencé pour se déplacer le long de la coulisse conductrice (17) à une distance donnée sans la toucher par l'effet des roues de contact (30A, 30B) et pour former l'électrode d'éclateur en regard de la coulisse conductrice (17).

8. Unité de décharge de pale de rotor (13) selon la revendication 7, dans laquelle l'électrode d'éclateur se présente sous la forme d'une saillie (34) sur le châssis (32) vers la coulisse conductrice (17) ou est fournie par le châssis (32) lui-même sans saillie (34) vers la coulisse conductrice (17).

9. Unité de décharge de pale de rotor (13) selon la revendication 7 ou 8, dans laquelle le second trajet de courant formé par l'éclateur (33) lors de l'apparition d'une étincelle pontant l'éclateur court à travers le châssis (32).

10. Unité de décharge de pale de rotor (13) selon l'une quelconque des revendications 5 à 9, dans laquelle les roues de contact (30A, 30B) sont montées sur le châssis (32) de manière à conduire l'électricité et le premier trajet de courant court depuis les roues de contact (30A, 30B) à travers le châssis (32).

11. Unité de décharge de pale de rotor (13) selon la revendication 1, dans laquelle la matière plastique élastomère conductrice de l'électricité ou semi-conductrice a une température de transition vitreuse en dessous de moins 20 °C ou de moins 30 °C ou de moins 40 °C.

12. Éolienne (1) comprenant une nacelle (3), un moyeu (4), au moins une pale de rotor (5) et au moins une unité de décharge de pale de rotor (13) selon l'une quelconque des revendications 1 à 11, la au moins une unité de décharge de pale de rotor (13) permettant aux charges électriques issues de la au moins une pale de rotor (5) de se décharger vers la nacelle (3) et la au moins une unité de décharge de pale de rotor (13) étant montée sur le moyeu (4) de manière isolée électriquement du moyeu (4).

13. Éolienne (1) selon la revendication 12,
dans laquelle la au moins une pale de rotor (5) est montée en mode orientable sur le moyeu (4) et la au moins une unité de décharge de pale de rotor (13) est associée à la au moins une pale de rotor (5), la coulisse conductrice (17) étant donc montée sur la au moins une pale de rotor (5),
dans laquelle le au moins un dispositif à rouleaux (15, 16) est dirigé avec sa au moins une roue de contact (30A, 30B) vers la coulisse conductrice (17") qui est montée sur la pale de rotor (5) pour établir les premier et second trajets de courant de la au moins une pale de rotor (5) à l'unité de décharge de pale de rotor (13).

14. Éolienne (1) selon la revendication 12,
dans laquelle la au moins une unité de décharge de pale de rotor (13) est agencée pour transférer des charges vers la nacelle (3) et la coulisse conductrice (17) est montée sur la nacelle (3),
dans laquelle le au moins un dispositif à rouleaux (15, 16) est dirigé avec sa au moins une roue de contact (30A, 30B) vers la coulisse conductrice (17') montée sur la nacelle (3) pour établir les premier et second trajets de courant de la nacelle (3) à l'unité de décharge de pale de rotor (13).

15. Éolienne (1) selon la revendication 12, dans laquelle la au moins une pale de rotor (5) est orientable et la au moins une unité de décharge de pale de rotor (13) comprend un premier et un second agencement de transfert de courant (50', 50"), la au moins une unité de décharge de pale de rotor (13) étant montée sur le moyeu (4) de manière isolée électriquement du moyeu (4),
dans laquelle le premier agencement de transfert de courant (50') est associé à la nacelle (3), une première coulisse conductrice (17') étant donc montée sur la nacelle (3),
dans laquelle le second agencement de transfert de courant (50") est associé à la au moins une pale de rotor (5), une seconde coulisse conductrice (17") étant donc montée sur la au moins une pale de rotor (5),
dans laquelle les dispositifs à rouleaux (15, 16) compris par les premier et second agencements de transfert de courant (50', 50") sont dirigés avec leur au moins une roue de contact (30A, 30B) vers la première coulisse conductrice (17') et la seconde coulisse conductrice (17"), respectivement, dans laquelle le premier et le second agencement de transfert de courant (50', 50") sont connectés électriquement afin d'établir les premier et second trajets de courant de la au moins une pale de rotor (5) montable en mode orientable à la nacelle (3), contournant ainsi électriquement le moyeu (4).
